# EUROPEAN PATENT APPLICATION

(11) **EP 2 317 737 A1**
(43) Date of publication of application: **04.05.2011**
(21) Application number: 10166570.1
(22) Date of filing: 18.06.2010
(51) Int. Cl.: H04M 1/247, H04M 1/2745, H04M 3/42, H04M 7/00

(54) **System and method for communicating guest preferences to a telephony device**

(30) Priority: 30.10.2009 US 589958
(71) Applicant: Mitel Networks Corporation, Ottawa, Ontario K2K 2W7 (CA)
(72) Inventor: Couse, Peter Francis, Ottawa Ontario K2C 0G5 (CA)
(74) Representative: Derry, Paul Stefan

(57) **Abstract**

A system and method for communicating guest preferences to a telephony device is disclosed. The system comprises a guest identification device (GID) configured to identify a guest and a digital telephony device which may be located in a hotel room. A GID reader is coupled to the digital telephony device. A guest personalization database located on a server is coupled to the digital telephony device. The guest personalization database contains a guest profile comprising guest information used to configure the telephony device for the guest.

## Description

### Background

The common use of cell phones has revolutionized the travel industry. The popularity of national service plans for most cell phone companies enables people to stay in contact throughout vacations and trips. Business travellers have especially benefitted from the ability to communicate while on the road. The ability to communicate no matter the location has provided a great increase in productivity to companies and their sales staff.

However, even with today's modern cell phone infrastructure, the use of cell phones is not perfect. There are still areas where cell phone use is spotty at best. This is especially true in large buildings, such as hotels. Many business trips are made to large hotels for conferences, conventions, and trade shows. Business travellers may stay within a large hotel for days at a time. During this time period, the use of cell phones within the building can be substantially reduced. The result can be missed calls, frequent dropped calls, and significantly reduced battery times due to the need to transmit at higher powers within a large building.

To reduce the limitations of cell phone service within hotels, many business travellers still use telephones provided by the hotel. However, very few people pack a hard copy of phone numbers and contact information while they travel. Typically, such information is stored in a traveller's cell phone. The use of convenient electronic directories has also significantly reduced the incentive for people to memorize frequently used phone numbers. Using a hotel phone can be difficult for a traveller if he or she has to look up each phone number in their cell phone in order to place a call on the hotel phone. This can be even more difficult if the cell phone is out of battery power after trying to communicate through the myriad walls and structures in a hotel. Thus, even with the challenges of using a cell phone in a large hotel, the disadvantages of using a hotel phone can discourage frequent use by travellers.

### Summary

A first aspect of the invention provide a system for communicating guest preferences to a telephony device, comprising:
a guest identification device [(GID)] configured to identify a guest;
a digital telephony device;
a GID reader coupled to the digital telephony device; and
a guest personalization database located on a server coupled to the digital telephony device, said guest personalization database containing a guest profile comprising guest information used to configure the telephony device for the guest.

The guest identification device may be selected from the group consisting of a digital identification device issued by a guest host and a guest credit card.

The guest profile contained in the guest personalization database may include personal contact information for at least one of selected individuals and selected entities.

The guest profile contained in the guest personalization database may include network information to enable at least one of the guest's wired and wireless computing and communication devices to be connected to a network through the digital telephony device.

The guest profile contained in the guest personalization database may includes group contact information to enable persons in a group to each have contact information on the digital telephony device to contact and leave messages for other members of the group staying in a same hotel chain.

The guest profile in the guest personalization database may be stored in the guest identification device and accessed by the digital telephony device using the GID reader.

The guest profile in the guest personalization database may be encrypted and accessible only with at least one of the guest identification device and a password.

The guest personalization database may be accessible at each hotel property location in a hotel chain to enable a guest staying at any hotel property location in the hotel chain to access his or her guest profile using the guest identification device and the digital telephony device in conjunction with the guest personalization database.

The guest personalization database may be operated by a third party.

The digital telephony device may be configured to store selected telephone numbers entered into the telephone in the guest personalization database for the guest.

The guest personalization database may be coupled to a guest host property management system.

The guest identification device may be further configured to be a guest proximity identification device configured to detect a presence of the guest using the GID reader.

The system may further comprise an environmental control communication module coupled to the digital telephony device and configured to adjust environmental control settings in a room when the guest's proximity may be detected, wherein the environmental control settings are selected based on the guest profile stored in the guest personalization database.

The system may further comprise a directed advertising database coupled to the guest personalization database to enable advertisements to be displayed on a display screen of the digital telephony device based on biographical information contained in the guest profile in the personalization database.

The guest personalization database may further comprise an exclusive direct dial phone number for the guest to enable the guest to have a same phone number each time the guest stays at one or more hotels in a hotel chain.

The system may further comprise a SIM card having a local number to enable the guest to use a cell phone with the SIM card to receive calls forwarded from the digital telephony device, wherein the information from the guest profile may be loaded on the SIM card to enable the guest to have desired contact information when using the SIM card.

A second aspect of the invention provides a method for communicating guest preferences to a telephony device, comprising:
identifying a guest using a guest identification device;
communicating the identification of the guest to a digital telephony device using a guest identification reader; and
accessing a guest personalization database located on a server that may be coupled to the digital telephony device containing guest profile for the guest; and
configuring the digital telephony device based on preferences previously selected by the guest that are located in the guest personalization database.

Configuring the digital telephony device may further comprise displaying a graphical user interface on the digital telephony device containing personal contact information for at least one of selected individuals and selected entities.

Configuring the digital telephony device may further comprise establishing a digital data connection with at least one of a computing device and a communication device based on connection information located in the guest personalization database.

A third aspect of the invention provides a system comprising:
one or more processors;
one or more computer readable media: computer readable instructions on the one or more computer readable media which, when executed by the one or more processors, cause the one or more processors to implement a method communicating guest preferences to a telephony device in a hotel, comprising:
identifying a guest using a guest identification device;
communicating the identification of the guest to a digital telephony device located in the hotel using a guest identification reader;
accessing a guest personalization database located on a server that is coupled to the digital telephony device containing guest profile for the guest; and
configuring the digital telephony device based on preferences previously selected by the guest that are located in the guest personalization database.

### Brief description of the drawings

Features and advantages of the invention will be apparent from the detailed description which follows, taken in conjunction with the accompanying drawings, which together illustrate, by way of example, features of the invention; and, wherein:
FIG. 1 illustrates an exemplary block diagram of a system for communicating guest preferences to a telephony device in accordance with an embodiment of the present invention;
FIG. 2 illustrates a digital telephony device coupled to a guest identification device reader in accordance with an embodiment of the present invention; and
FIG. 3 depicts a flow chart for a method for communicating guest preferences to a telephony device in accordance with an embodiment of the present invention.

Reference will now be made to the exemplary embodiments illustrated, and specific language will be used herein to describe the same. It will nevertheless be understood that no limitation of the scope of the invention is thereby intended.

### Detailed description of example embodiments

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labelled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

Furthermore, the described features, structures, or characteristics may be combined in any suitable manner in one or more embodiments. In the following description, numerous specific details are provided, such as examples of materials, fasteners, sizes, lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

### Definitions

As used herein, the term "hotel" is used in its generic sense to identify a room that is paid for by a traveller for use for one or more nights. The term is also intended to include, but is not limited to motels, bed and breakfasts, and other types of rental properties.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

### The Invention

Cell phone use inside a hotel can be spotty, at best. Cell phones can quickly loose their charge attempting to transmit and receive signals through the myriad walls and obstacles in a hotel. However, despite the challenges, many travellers go out of their way to keep using their cell phones. They will walk outdoors or wander the hotel looking for hot spots where they can receive a better signal. Often they may end up tethering themselves to a wall with their plugged in cell phones.

Many travellers put up with the inconveniences caused by using cell phones in hotels due to the services provided by the cell phone, such as the extensive contacts list stored in the cell phone, the ability to send and receive email, and other personal information. Most people no longer bother to memorize phone numbers or carry hard copies of contact lists. Even commonly used numbers are merely stored in a cell phone, allowing the user to place a call at the touch of a button. Thus, without the information on a cell phone, a traveller may find it difficult to place calls or conduct business using a hotel provided phone system.

Hotels have spent large amounts of capital attempting to provide travellers the same basic telecommunications and internet conveniences that they have at home and at work. The wired phones available in most hotels provide the clear, unbroken communication that is often lacking when using a cell phone. Most hotel phone systems, however, significantly lag the technologies with which people have grown accustomed. The lack of ability to securely store contact information and access email using a phone provided by a hotel significantly reduces their usefulness. Most hotel phones are now used only for hotel conveniences, such as contacting the front desk, a bellhop, or the concierge.

In order to increase the usefulness of a phone provided by a hotel, a system for communicating guest preferences to a telephony device is disclosed. If a guest has the ability to transfer desired contact information from his or her business phone, home phone, or cell phone to a phone used at a hotel, the enhanced clarity and reliability of a wired hotel phone can be combined with the advantages of using a cell phone, such as the ability to quickly access desired contact information. A guest's contact information can be compiled in a guest profile and stored in a database. The database can include guest profiles for thousands or millions of different guests. Each time the guest stays at a hotel or hotel chain having such a system, the guest profile can be accessed using the hotel phone, thereby enabling the guest to enjoy the same communication abilities and conveniences at the hotel as they enjoy at home or in the office. In addition, the guest profile can be used to enhance group communications, environmental comfort, and even cellular communication while staying at the hotel. These and other embodiments will be described below in more detail.

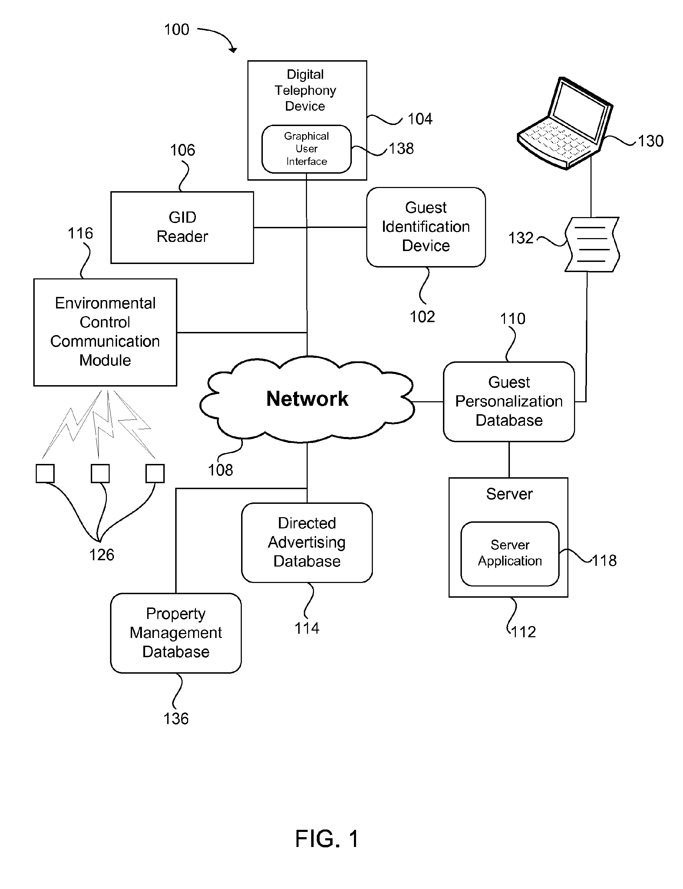

FIG. 1 provides an example illustration of a block diagram of a system for communicating guest preferences to a telephony device. In one embodiment, the system 100 comprises a guest identification device 102. The guest identification device contains sufficient information to identify a particular guest at a hotel or hotel chain. For example, it may contain a hotel assigned guest identification value stored in a digital format. The information can be encrypted or stored in a proprietary fashion to protect the privacy of the guest.

The guest identification device 102 can be any type of electronically readable device used to identify the guest. For example, a hotel key can be associated with a specific guest. A credit card used by a guest to reserve a hotel room can also be used to identify a particular guest. Other types of digital devices such as a smart card or a device embedded with a radio frequency identification (RFID) chip can also be used. In addition, a biometric device can be used, such as a finger print reader, a retinal scanner, and so forth. In one embodiment, the guest identification device can be the guest identification value itself, without the need to be contained in a physical device. For example, the guest identification value may be the guest's room number followed by a personal identification number (PIN) that is established at check-in time.

The system 100 further comprises a digital telephony device 104. The digital telephony device can be located in a hotel room. The term hotel room can include rooms designed for guests to sleep in, as well as other private or public rooms located in a hotel such as conference halls, lounges, restaurants, hallways, bathrooms, and other rooms within the hotel. In one embodiment, the digital telephony device can be a telephony device configured to communicate over a network using the voice over internet protocol (VOIP).

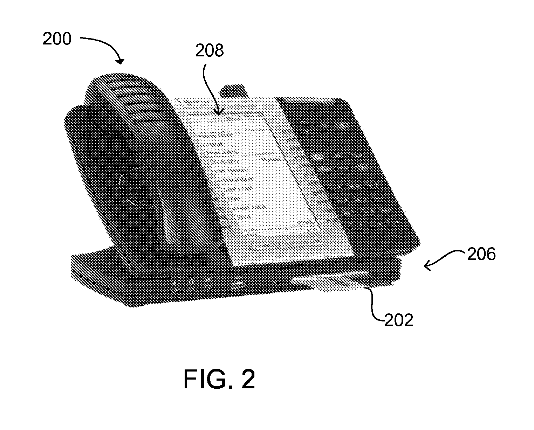

A guest identification device (GID) reader 106 can be coupled to the digital telephony device 104. In one embodiment, the GID reader 106 can be a card reader for cards having a digital magnetic strip. For example, FIG. 2 shows one embodiment of a VOIP telephony device 200 integrated with a GID reader 206 comprising a digital magnetic strip reader. In this embodiment, a guest can insert his or her guest identification device 202 through the card reader 206 to provide identification to the telephony device. The VOIP telephony device 200 can include a viewing screen 208 used to view a graphical user interface. The graphical user interface can include a plurality of different screens. A user can interact with the interface through buttons located adjacent the screen. Alternatively, the viewing screen can be configured as a touch style screen, enabling the user to interact through touch or with a stylus.

The GID reader 206 can also be configured to communicate wirelessly with the GID device 202. For example, when the GID device is embedded with an RFID chip, or comprises a smart card, the GID reader can communicate with the GID device via radio frequency communications, magnetic induction, or other wireless communication means integrated in the digital telephony device, as can be appreciated. As discussed above, the GID reader can also be a biometric reader configured to read finger prints, eye scans, or other unique biometric markers on a person's body.

Returning to FIG. 1, in another embodiment, the GID reader 106 may be located at a separate location from the digital telephony device 104. In this embodiment, the GID reader 106 can communicate with the digital telephony device 104 via a digital network 108 used to interconnect the GID reader and the digital telephony device 104. For example, the GID reader 106 can be located at a check-in desk of the hotel. When the guest checks in at the hotel, a hotel clerk can swipe the guest identification device 102, such as the guest's hotel key card or personal credit card used by the guest to reserve the hotel room, through the GID reader located at the front desk. The digital information contained on the guest identification device 102 that is used to identify the guest can be communicated through the network 108 to the digital telephony device 104 located in the hotel room to which the guest is assigned in the hotel.

The system 100 further comprises a guest personalization database 110 located on a server 112 that is coupled to the digital telephony device 104. The guest personalization database contains at least one guest profile 132. In practice, the guest personalization database can contain thousands, or even millions of different guest profiles. The guest profile contains information entered by the guest to enable the guest to configure telephones used at a hotel to function in a similar fashion as the guest's work phone, home phone, and/or cell phone does.

The guest can enter desired data into the guest profile 132 using a graphical user interface 130 such as a web page. For example, during the process of reserving a hotel room using the internet, a hotel's internet site can include a secure web page that is used by the guest to enter desired information. The information can include, but is not limited to: desired contact information for friends, clients, business acquaintances, and other persons the guest may call while staying at the hotel; the names of business associates that are also staying in the hotel; the name of the function that the guest is attending in the hotel; the name of a group staying at the hotel to which the guest belongs, information needed to establish a wired or wireless connection with a network through the digital telephony device for the guests mobile computing devices, and/or communications devices, a web address needed to access the guest's email, and other desired information. For example, the guest can enter preferences for amenities and services located near the hotel that the guest is interested in. For instance, the guest may enter preferences for churches, types of restaurants that he or she is interested in, pharmacies, and so forth. These preferences can then be used to provide a directory on the phone for establishments that meet these preferences, such as contact information for local seafood restaurants and the nearest Catholic Church. These preferences can also be used to provide advertising and special offers from applicable establishments. Advertising will be discussed more below. The information contained in the guest profile can be encrypted to protect the guest's information. The guest may also enter a password or passcode needed to access the information in the guest profile.

When a guest is identified at the digital telephony device 104 through recognition of the guest identification device 102 using the GID reader 106, the digital telephony device can be configured to access the data in the guest profile 132. In one embodiment, the guest profile can be stored in the guest personalization database 110. Alternatively, the guest profile can be stored on the guest identification device 102 and accessed directly by the GID reader 106. The digital telephony device can then be set up based on the information stored in the guest profile 132.

In one embodiment, the digital telephony device 104 can communicate with an external application 118 running on the server 112 through an application programming interface (API) supplied by the phone manufacturer that allows the external application operating on the server to use the phone's graphical display. The API also allows the external application to be notified of button presses (or screen presses for a touch screen) on the phone, as well as the ability to perform telephony actions such as placing a phone call to a specified number. The API allows the IP address of an external web application that the phone is to run to be specified at startup. The API can be configured to communicate via a variety of languages, such as HTML, XML, or Java, depending on what is supplied by the phone manufacturer.

The external application 118 uses the display and buttons on the digital telephony device 104 in the same manner as a PC based application uses the PC's display and keyboard. In one embodiment, the external application can provide the following capabilities to the user of the digital telephony device.

The external application can provide a Graphical User Interface (GUI) 138 viewable on a viewing screen of the digital telephony device 104 that is used to instruct a guest on how to link the guest identification device 102 with the GID reader 106. The GUI can also provide additional information to the guest related to loyalty programs, conference info, advertising, and so forth. The GUI can also provide an interface for the guest to adjust room temperature as well as controlling room lighting, etc. This will be discussed more fully below.

The server application 118 can perform two high level functions: 1) an Application component that serves up the IP Phone guest Graphical User Interface; and 2) a Web Services component that can interface with a hotel's existing Property Management System database 136 to supply guest presence and room status information to the hotel.

In one embodiment, the web services component utilizes an API provided by a Property Management System database 136. Information provided to the Property Management System database can be accessed from across a hotel network, such as a local area network, wide area network, virtual private network, or the internet, making for a flexible solution from a deployment perspective. This enables the server application 118 to be resident at the hotel property or hosted externally from a central location that manages a number of properties.

The server 112 containing the database 110 can be connected to each desired digital telephony device 104 in a hotel or hotel chain through the network 108. In one embodiment, the server and guest personalization database may be used for a single hotel. Alternatively, the guest personalization database can be connected to each hotel in a hotel chain through a virtual private network (VAN) or other type of network system used to maintain the privacy of the information in the guest profiles 132 stored in the database 110. The guest personalization database for a particular hotel may be maintained by the hotel, the hotel chain, or a third party contractor.

The ability to configure the digital telephony device 104 for a guest using the information stored in his or her guest profile 132 provides many significant advantages. The guest can access much of the information on the hotel phone that the guest typically is able to access when using his or her cell phone or business phone. This encourages the guest to conduct business and make phone calls using the hotel telephone, which can provide revenue for a hotel. In addition, the hotel phone can be configured with many advantageous features using the guest profile information. The features can provide conveniences to hotel guests in their interaction with their contacts, associates staying at the hotel or hotel chain, and interaction with the community. These features and conveniences can encourage guests to have more brand loyalty to a hotel or hotel chain that employs such a system. Thus, the use of such a system to configure hotel phones can develop a symbiotic relationship between guests and hotels. Examples of some features available with such a system are given below.

### Example Embodiments

In accordance with one embodiment of the invention, a speed dial feature on the digital telephony device 104 that is made available on the telephone can be configured using the information in the guest profile 132 stored in the guest personalization database 110 on a server 112. A guest's desired contacts that are contained in a speed dial feature on the telephony device can be entered into the guest profile using a graphical user interface 130 made available to the guest. As previously discussed, this may be a website offered through the hotel's website, or through a third party vendor associated with the hotel.

In addition, phone numbers that are entered into the digital telephony device 104 by a guest or associate may be stored as a speed dial function in the telephone. When a phone number has been entered, the guest or other user can be queried as to whether they would like the telephone number that is entered into the telephone to also be stored in the guest profile. This enables the guest to construct or add to his or her guest profile while staying at a hotel. The guest may be asked whether to store the information for a stay in any hotel in the chain, or just at the specific hotel in which it is entered. This profile information can be stored in the guest personalization database 110 for use by the guest during a later stay at the hotel or a hotel within the hotel chain. This can enable the guest to store the reservation number for his or her favourite restaurant located near the hotel, while limiting the numbers listed on speed dial for stays at different hotels.

In another embodiment, a guest can enter call/service restrictions into the guest profile 132. Such restrictions can be useful for a family staying at a hotel. In this embodiment, the guest information device may be a hotel key card. Each family member can be given a separate hotel key card. The parents may decide to leave their children in the hotel room while they go for dinner at the hotel's restaurant. When the children's card is inserted into the GID reader 106 on the digital telephony device 104, the guest profile 132 information for the children can be used to configure the hotel phone 104 to have desired limitations, such as for long distance calls, 1-900 calls, calls made to room service, access to adult movies, access to in-room video games, etc. Such limitations may also be applied by corporations to the guest profile of each of their employees staying at a hotel or hotel chain.

In one embodiment, the guest profile can include information relating to the guest's mobile computing devices and/or mobile communications devices. The devices that the guest travels with can be added to the guest profile using the graphical user interface 130. In one embodiment, the server application 118 can include support for widely used devices such as a Blackberry® communication device, an iPhone® device, a laptop, and so forth. When the guest arrives in his or her room and links the guest identification device 102 with the GID reader 106, the GUI 138 on the digital telephony device 104 can include instructions to connect the mobile communication device or mobile computing device with the digital telephony device. This may be accomplished through a wired or wireless connection. The information needed to connect the device can be stored in the guest profile to enable easier connection the next time the guest stays in the hotel or hotel chain. The ability to connect a computing or communication device with the digital telephony device can enable the guest to easily access services such as the internet and email.

Alternatively, the digital telephony device 104 can include an integrated web browser that can be accessed through the phone's GUI 138. The guest can include email account information in the guest profile to enable his or her email to be accessed though the web browser available on the phone's GUI. In one embodiment, a hot key can be displayed on the phone's GUI to enable one touch access to the guest's email account. The guest can also include links for favourite internet addresses that can be accessed on the web browser in the phone's GUI 138.

In another embodiment, when a group of people are staying in the same hotel or hotel chain, the guest preference of each member of the group can be set up to enable easy access to group members using the hotel phone. A group may be a family, a group of extended family members, a group of friends, a group of co-workers, and so forth. The members of the group can be identified and linked through their guest profile 132 information. For example, the guest profile may allow the creation of a group name and possible password. Each member in the group can enter or select the group name in the graphical user interface 130. Alternatively, members of the group may be identified at check in time at the hotel and their guest profiles can be updated accordingly.

When the digital telephony devices 104 are configured using the guest profile 132 of the guest, the hotel telephone of each member in the group can be configured with contact information for each guest in the group. For example, a GUI 138 on the phone can display a tab showing group contact info. When the tab is accessed by a guest, other guests contact information, such as their room number and hotel extension number can be displayed. The access information can be made accessible through a one touch speed dial button on the phone.

In another embodiment, the in-room status of each guest having a separate room can also be displayed on the hotel phone. In this embodiment, the guest identification device 102 can be configured to identify whether the guest associated with the guest identification device is in the hotel room. This may be accomplished by requiring that the guest insert his or her guest identification device in the GID reader 106 that is coupled to the digital telephony device 104 when the guest is present in the room. For example, the environmental controls such as heating, air conditioning, and lighting in the room may be dependent on the guest inserting his or her guest identification device in the GID reader. This will be discussed more fully below.

When the guest has inserted his or her guest identification device in the GID reader, the information can be relayed to their guest profile 132 in the guest personalization database 110. This information can then be updated on the hotel phones of other guests in the same group, enabling the GUI 138 on the display of the hotel phone 104 to show which guests in the group are located in their rooms.

Similarly, groups can also be established on a wider basis, such as business associates that stay in different hotels within the same hotel chain. For example, a sales group for a company may be attending two different trade shows on different coasts. The group can choose to stay at a selected hotel chain based on the availability of the system for communicating guest preferences to a telephony device throughout the hotel chain. The members of the sales group can identify that they are members of the same group in each of their guest profiles 132, as previously discussed. When members of the group have checked in and become associated with a digital telephony device 104 in a hotel in the same hotel chain by linking their guest identification device 102 with the GID reader 106, the group members contact information and in-room status can be displayed on the hotel phone of each member in the group staying in a hotel in the hotel chain. Thus, those members of the group staying at a hotel on the west coast of the United States can have contact information, speed dial, and in-room status information for the other members of their group in their hotel, as well as for those members of their group staying in a hotel in the same hotel chain that is located on the east coast of the United States, or even in another country. This enables communication between co-workers in the group to be nearly as easy while staying in the hotel chain as it is when they are all in the same office building.

The number of members in the group can be limited based on those given access to join the group. For example, those given the group name and/or password needed to join the group. The group may be limited to a subset of a larger group of employees from a company. In addition, each guest may join more than one group. For instance, a guest can join one group for his sales team, another group related to an executive committee, and a third group relating to family members staying in the hotel during a trade show. Each group can be identified by name on the GUI 138 shown on the display of the digital telephony device 104 in the hotel room.

The ability to easily contact other members in a group staying at a hotel can be a great convenience to guests. In one example embodiment, each member of a family going on a cruise vacation on a cruise ship can be assigned a cruise card. The cruise card can be used as the guest identification device 102 for each member of the family. The names of all of the family members and their room number/extension number can be stored in their respective guest profiles 132 at check-in. The guest profiles may be stored on a server 112, or in the guest identification device 102 itself when technology such as a smart card is used.

A voice message mailbox may be created for each family member. Alternatively, a group mail box, such as one for parents and one for children, may be created. During the cruise, the parents and children can enjoy participating in separate activities. These separate activities can make it difficult to communicate with other members of the group. It is common for family members to attempt to communicate using link to link radio frequency communication devices such as common walkie-talkies. However, interference caused by ship building materials can often leave link to link RF communications difficult. This can lead to frustration and miscommunication, thereby reducing the amount of relaxation enjoyed by the family while on the cruise vacation.

With the capacity to configure the digital telephony device in each cabin with group information, the ability to communicate is greatly enhanced. For example, in the family discussed above, the parents can leave a message for their kids to meet them for lunch at one of the restaurants on the ship at a specific time. This can be accomplished by one of the parents placing their guest identification device 102 (cruise card) in a conveniently located phone on the ship. Upon doing so, the digital telephony device will be configured based on their guest profile 132, stored either in the cruise card itself, or accessible via the network 108. The phone 104 can be configured to display the members of their group. The parents can select their children (individually or as a group) and activate a hot key. The hot key may be used to contact the kids cruise cabin, and, if not there, to leave a message in their voice mailbox. Alternatively, a hot key may be used to access their mailbox directly. The parents can leave a message in the corresponding mailbox indicating where to meet for lunch.

Prior to lunch, the children can access their mailbox on a conveniently located phone 104 on the ship using the same technique described above to see if their parents, or other members of their group, left them any messages. The children can be given the option of relaying a message back to their parents' mailbox and/or ship cabin. The digital telephony device 104 can be configured to identify each message according to the person that left it, allowing the children to quickly access the message from their parents and meet them at the designated time and location.

When the parents or children insert the cruise card into a digital telephony device on the ship, the telephony device can also indicate whether the party is located in their cabin, as previously discussed. This feature can be used to quickly determine whether the parents or children are in their ship cabin without the need to make a phone call.

The same messaging system can be useful for members of a tour group staying at a hotel or on a cruise ship. Messages can be left and received between individual group members in the same manner discussed above. Messages for all tour group members can also be left by the tour guide/director, such as a change in departure time or the return time.

In another embodiment, the system for communicating guest preferences to a digital telephony device can enable a guest to forward phone calls from a selected phone, such as from the guest's business phone, in a relatively simple and manageable manner. In one embodiment, the guest can obtain a direct inward dial (DID) phone number that allows calls to that number to directly ring the phone in the guest's hotel room without going through the hotel switchboard. This number may be provided by the hotel, or a third party. In hotels located in a hotel chain having VoIP phone systems that are networked together over a virtual private network the DID number may be a number that is local to the guest's residence or work, enabling phone calls to be forwarded without long distance charges.

After check-in to the hotel, the guest can log into or call into their business phone system and set call forwarding of their business phone to forward all calls to the hotel DID number. From this point onward, all calls to the guest's business phone number will be forwarded to the hotel DID number.

Whenever the guest is in his or her hotel room and has the guest information device 102 is connected with the GID reader 106, calls to the guest's business phone can ring at the guest's hotel room phone. The fact that the guest is in the hotel room and not located at his or her business is transparent to the caller.

When the guest leaves his or her room and the guest information device 102 is no longer connected with the GID reader 106, the information contained in the guest profile 132 can be used to forward the calls from the digital telephony device 104 in the hotel room to another selected device, such as the user's business cell phone.

In this way, the guest can always be reached via his or her office phone number. If the guest's travels take him or her to another country, the guest can choose to rent a cell phone or if the guest has a business cell phone that is compatible, they can purchase a local SIM Card. The rented cell phone or purchased SIM card allow the user to receive calls within the country being visited without incurring roaming or long distance charges. The cell phone or SIM card can be issued by the hotel or another provider. The guest profile can be updated with the local phone number associated with the rented cell phone/SIM card. DID calls can thus be forwarded by the hotel phone system to the rented cell phone or the guest's business phone using a local SIM card. These calls can be local calls and therefore would not incur any long distance charges. This can significantly reduce the cost associated with receiving cell phone calls while working in countries such as those in Europe and avoid costly roaming and long distance charges. In most European countries, incoming calls to a cell phone are free, so there would be no cost for receiving calls for this service.

The SIM card provided by the hotel or third party can include selected information contained in the guest profile 132. For example, the contact information and speed dial information contained in the guest profile 132 can be copied to the SIM card, thereby enabling the guest to use a different SIM card than the guest's usual SIM card used with his or her local provider, while maintaining the ability to look up phone numbers and contact information on the guest's business cell phone.

As part of this service, the hotel or third party can also offer the guest an outbound long distance call service, where the cell phone provider can have a speed dial programmed into it that dialled an auto attendant feature on the hotel's VOIP phone system. If the guest wished to place an outbound long distance call, they can speed dial the hotel number programmed on the cell phone. The auto attendant application can answer the call and ask the caller to enter the digits for the phone number they wished to reach. The hotel's phone system can then dial the number and connect the guest to that call. The guest can be charged a special long distance rate provided by the hotel, which can be much less expensive than calling long distance from his or her cell phone. In this embodiment, there may still be a charge for the guest to place an outgoing call from his or her cell phone to the hotel number.

In another embodiment, the charge for the outgoing call can be avoided by installing a client application on the guest's cell phone. The client application can intercept calls placed on the cell phone and send a data message to the hotel's VOIP phone system via the phone's GPRS link with the number that was dialled. The hotel phone system can then simultaneously place a call to that number while calling the guest's cell phone and connect the two calls together. The client application on the cell phone can wait for the incoming call from the hotel phone system and answer it immediately before it rings so that the user does not even realize that there is an incoming call. Because the call to the cell phone is a received call, there is typically no charge. In this way, no charge will be accrued for using the cell phone provided by a hotel in Europe.

In another embodiment, the system 100 can further comprise an environmental control communication module 116. A significant cost for hotels is the cost associated with the lighting, electrical appliances, and the heating-ventilation-air conditioning (HVAC) system in guest rooms. The opportunity to minimize these costs by disabling and/or minimizing power consumption of these devices when the room is not being occupied can save significant energy. This can provide savings to hotel owners, and reduce the carbon footprint of the hotel. A determination can be made as to whether a hotel room is occupied through the use of the guest identification device 102 in conjunction with a GID reader 106 located in the same hotel room as the digital telephony device 104. For example, when the guest enters his or her assigned hotel room and links the guest identification device 102 with the GID reader 106, it can be determined that the room is occupied. At that point, the environmental controls can be adjusted based on the presence of the guest in the hotel room.

In one embodiment, the guest identification device 202 can be linked with the GID reader 206 by inserting the guest identification device into the GID reader, as shown in FIG. 2. Alternatively, wireless means such as RFID or Bluetooth® may be used to detect the presence of the guest identification device in the room. The information stored in the guest profile 132 can include desired environmental settings. This can include the room temperature, the lighting (high or low), the desired television station, such as CNN®, and so forth. These preferences can be selected by the guest prior to arrival using the graphical user interface 130, as previously discussed. Alternatively, the preferences can be stored by the guest based on the setup of the room while the guest is occupying the room. This can save the guest from having to enter a large amount of data into the guest profile, while enabling the environmental controls to be quickly and easily adjusted each time the guest stays in a room in the hotel or hotel chain.

A graphical user interface on the digital telephony device 104 can be used to adjust the various environmental controls within the room. The environmental controls can initially be set to the values stored in the guest profile. In one embodiment, these values can be communicated wirelessly to environmental device controls 126. This can be useful in older hotels that have been retrofitted with modern, wireless control systems. Newer hotels typically include digital cabling installed throughout the hotel that enables the various environmental controls and telephone systems to be networked together. Therefore, in newer hotels the environmental settings can be communicated through the server application 118 to the environmental controls in the guest's room.

The environmental control communication module 116 can be integrated into the digital telephony device 104. Alternatively, the digital telephony device can include a short range wireless communication module, such as a Bluetooth® compliant module or a wireless communication module that is compliant with IEEE 802.11 or IEEE 802.15 can be used to communicate with the environmental control communication module 116, which can be used to adjust the environmental controls 126 in the hotel room, as discussed above.

In another embodiment, the digital telephony device can be coupled to a directed advertising database 114. The directed advertising base can be in communication with the guest personalization database, or portions of the database. Information in the guest personalization database can be made accessible by the hotel or a third party to selected advertisers. The advertisers can direct advertisements to be displayed in the display on the digital telephony device 104. The advertisements displayed on a guest's digital telephony device can be selected based on the information provided in the guest personalization database. The database may contain additional biographical information such as the guest's gender, age, reason for stay, and so forth.

In one embodiment only selected portions of the guest profile are accessible to the directed advertisers, such as the biographical information and group information. A directed advertiser can then send advertisements based on whether the guest's gender, age, and whether the guest is there for business or pleasure. Guests that are staying at the hotel for a specific event, such as a trade show, can receive advertisements from other participants in the trade show. The ability to display directed advertising in a guest's room can be lucrative for a hotel.

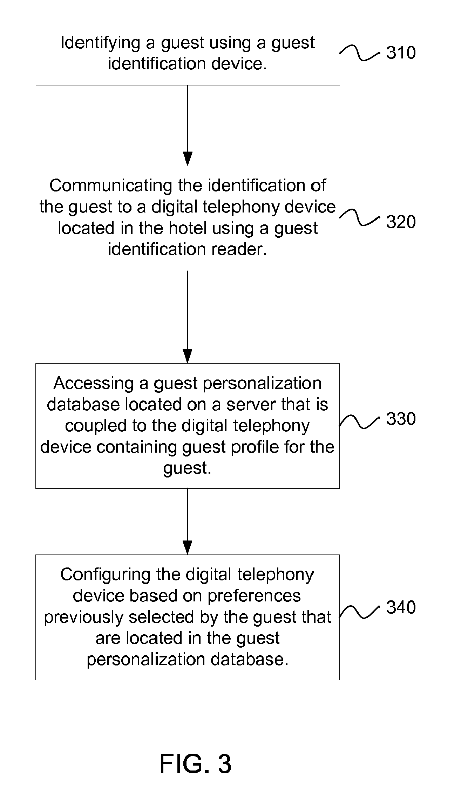

In another embodiment, a method for communicating guest preferences to a telephony device is disclosed, as depicted in the flow chart of FIG. 3. The method includes the operation of identifying 310 a guest using a guest identification device. The identification of the guest can be communicated 320 to a digital telephony device located in the hotel using a guest identification reader. The method includes the additional operation of accessing 330 a guest personalization database that is located on a server that is coupled to the digital telephony device containing guest profile for the guest. The digital telephony device can then be configured 340 based on preferences previously selected by the guest that are located in the guest personalization database.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A system for communicating guest preferences to a telephony device, comprising:
a guest identification device [GID] configured to identify a guest;
a digital telephony device;
a GID reader coupled to the digital telephony device; and
a guest personalization database located on a server coupled to the digital telephony device, said guest personalization database containing a guest profile comprising guest information used to configure the telephony device for the guest.

2. The system of claim 1, wherein the guest identification device is selected from the group consisting of a digital identification device issued by a guest host and a guest credit card.

3. The system of claim 1, wherein the guest profile contained in the guest personalization database includes one or more of the following:
personal contact information for at least one of selected individuals and selected entities,
network information to enable at least one of the guest's wired and wireless computing and communication devices to be connected to a network through the digital telephony device, and
group contact information to enable persons in a group to each have contact information on the digital telephony device to contact and leave messages for other members of the group staying in a same hotel chain.

4. The system of claim 1, wherein the guest profile in the guest personalization database is stored in the guest identification device and accessed by the digital telephony device using the GID reader.

5. The system of claim 1, wherein the guest profile in the guest personalization database is encrypted and accessible only with at least one of the guest identification device and a password.

6. The system of claim 1, wherein the guest personalization database is accessible at each hotel property location in a hotel chain to enable a guest staying at any hotel property location in the hotel chain to access his or her guest profile using the guest identification device and the digital telephony device in conjunction with the guest personalization database.

7. The system of claim 1, wherein the digital telephony device is configured to store selected telephone numbers entered into the telephone in the guest personalization database for the guest.

8. The system of claim 1, wherein the guest identification device is further configured to be a guest proximity identification device configured to detect a presence of the guest using the GID reader, and optionally further comprising an environmental control communication module coupled to the digital telephony device and configured to adjust environmental control settings in a room when the guest's proximity is detected, wherein the environmental control settings are selected based on the guest profile stored in the guest personalization database.

9. The system of claim 1, further comprising a directed advertising database coupled to the guest personalization database to enable advertisements to be displayed on a display screen of the digital telephony device based on biographical information contained in the guest profile in the personalization database.

10. The system of claim 1, wherein the guest personalization database further comprises an exclusive direct dial phone number for the guest to enable the guest to have a same phone number each time the guest stays at one or more hotels in a hotel chain.

11. The system of claim 1, further comprising a SIM card having a local number to enable the guest to use a cell phone with the SIM card to receive calls forwarded from the digital telephony device, wherein the information from the guest profile is loaded on the SIM card to enable the guest to have desired contact information when using the SIM card.

12. A method for communicating guest preferences to a telephony device, comprising:
identifying a guest using a guest identification device;
communicating the identification of the guest to a digital telephony device using a guest identification reader; and
accessing a guest personalization database located on a server that is coupled to the digital telephony device containing guest profile for the guest; and
configuring the digital telephony device based on preferences previously selected by the guest that are located in the guest personalization database.

13. The method of claim 17, wherein configuring the digital telephony device further comprises displaying a graphical user interface on the digital telephony device containing personal contact information for at least one of selected individuals and selected entities.

14. The method of claim 17, wherein configuring the digital telephony device further comprises establishing a digital data connection with at least one of a computing device and a communication device based on connection information located in the guest personalization database.

15. A system configured to perform the method of any of claims 12 to 14.
